(19) Europäisches Patentamt
European Patent Office
Office européen des brevets

(11) **EP 4 273 617 A1**

(12) **EUROPEAN PATENT APPLICATION**
published in accordance with Art. 153(4) EPC

(43) Date of publication:
**08.11.2023 Bulletin 2023/45**

(21) Application number: **21915068.7**

(22) Date of filing: **10.12.2021**

(51) International Patent Classification (IPC):
**G02B 30/30** (2020.01)     **G03B 15/00** (2021.01)
**G03B 17/00** (2021.01)     **G03B 35/18** (2021.01)

(52) Cooperative Patent Classification (CPC):
**G02B 30/30; G03B 15/00; G03B 17/00;
G03B 35/18**

(86) International application number:
**PCT/JP2021/045674**

(87) International publication number:
**WO 2022/145207 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.12.2020  JP 2020219753**

(71) Applicant: **Kyocera Corporation
Kyoto-shi Kyoto 612-8501 (JP)**

(72) Inventors:
• **KUSAFUKA, Kaoru
Kyoto-shi, Kyoto 612-8501 (JP)**
• **TADAUCHI, Ryo
Kyoto-shi, Kyoto 612-8501 (JP)**
• **SHIMADA, Takashi
Kyoto-shi, Kyoto 612-8501 (JP)**

(74) Representative: **TBK
Bavariaring 4-6
80336 München (DE)**

(54) **THREE-DIMENSIONAL DISPLAY DEVICE AND IMAGE DISPLAY SYSTEM**

(57)    A three-dimensional display device includes a liquid crystal panel, a first optical panel, and a second optical panel. The three-dimensional display device may further include a backlight and a controller. The first optical panel and the second optical panel define a traveling direction of incident light.

FIG. 1

EP 4 273 617 A1

**Description**

TECHNICAL FIELD

The present disclosure relates to a three-dimensional (3D) display device and an image display system.

BACKGROUND OF INVENTION

A known technique is described in, for example, Patent Literature 1.

CITATION LIST

PATENT LITERATURE

Patent Literature 1: Japanese Unexamined Patent Application Publication No. 2012-141331

SUMMARY

In an aspect of the present disclosure, a three-dimensional display device includes a liquid crystal panel, a first optical panel, and a second optical panel. The liquid crystal panel displays a parallax image. The first optical panel is on a first surface of the liquid crystal panel. The second optical panel is on a second surface of the liquid crystal panel. The first optical panel and the second optical panel define a traveling direction of image light of the parallax image.

In an aspect of the present disclosure, an image display system includes a three-dimensional display device, a camera, a detector, and a controller. The three-dimensional display device includes a liquid crystal panel, a first optical panel, and a second optical panel. The liquid crystal panel displays a parallax image. The first optical panel is on a first surface of the liquid crystal panel. The second optical panel is on a second surface of the liquid crystal panel. The first optical panel and the second optical panel define a traveling direction of image light of the parallax image. The camera captures an image of a face of a user. The detector detects positions of two eyes of the user using the image captured and output from the camera. The controller controls the liquid crystal panel based on the positions of the two eyes of the user detected by the detector.

BRIEF DESCRIPTION OF THE DRAWINGS

The objects, features, and advantages of the present disclosure will become more apparent from the following detailed description and the drawings.

FIG. 1 is a schematic diagram of a 3D display device according to an embodiment.
FIG. 2 is a schematic diagram describing the relationship between the eyes of a user, a liquid crystal panel, a first optical panel, and a second optical panel.
FIG. 3A is a diagram describing a first example of a parallax image displayed on the liquid crystal panel.
FIG. 3B is a diagram describing a second example of the parallax image displayed on the liquid crystal panel.
FIG. 4 is a schematic diagram of a 3D display device according to another embodiment of the present disclosure.
FIG. 5 is a schematic diagram of a head-up display mounted on a movable body, such as a vehicle, as one implementation of the display device according to an embodiment of the present disclosure.

DESCRIPTION OF EMBODIMENTS

A known display device with the structure that forms the basis of a three-dimensional (3D) display device according to one or more embodiments of the present disclosure projects images appearing on a display panel toward the two eyes of a user through a parallax barrier to provide a stereoscopic view.

One or more embodiments of the present disclosure will now be described with reference to the drawings. The drawings used herein are schematic and are not drawn to scale relative to the actual size of each component.

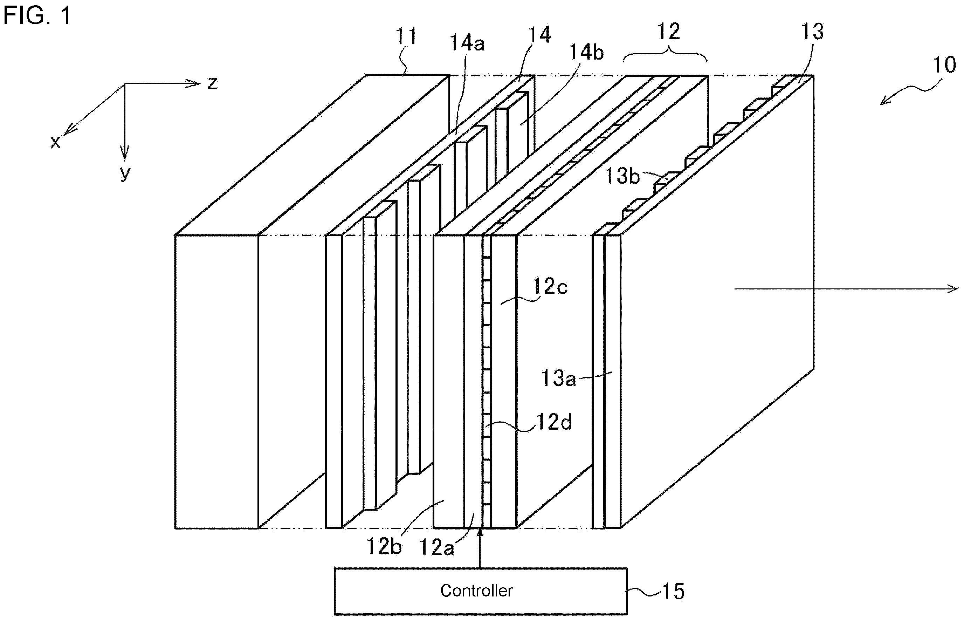

FIG. 1 is a schematic diagram of a 3D display device according to an embodiment of the present disclosure. The schematic diagram of FIG. 1 is an exploded perspective view for ease of explanation. A 3D display device 10 includes a liquid crystal panel 12, a first optical panel 13, and a second optical panel 14. The 3D display device 10 may further include a backlight 11 and a controller 15.

In one embodiment, the backlight 11, the liquid crystal panel 12, the first optical panel 13, and the second optical panel 14 are arranged in the order of the backlight 11, the second optical panel 14, the liquid crystal panel 12, and the first optical panel 13 toward the user along an optical path of image light of an image displayed for the user.

The backlight 11 may include, for example, a light source, a light guide plate, a diffuser plate, and a diffuser sheet. The backlight 11 may be, for example, a surface-emitting backlight that emits light from the light source after spreading the light uniformly in a plane direction through, for example, the light guide plate, the diffuser plate, or the diffuser sheet. The planar light emitted from the backlight 11 passes through the second optical panel 14, the liquid crystal panel 12, and the first optical panel 13 in this order to reach the eyes of the user as image light. The backlight 11 may use, as a light source, a light emitter such as a light-emitting diode (LED), an organic EL element, or an inorganic EL element. The backlight 11 may have any structure that allows control of the light intensity and the light intensity distribution.

The liquid crystal panel 12 may be, for example, a transmissive liquid crystal display panel or another display element. The liquid crystal panel 12 may have the structure of a known liquid crystal panel. The known liquid crystal panel herein may be an in-plane switching (IPS) panel, a fringe field switching (FFS) panel, a vertical alignment (VA) panel, an electrically controlled birefringence (ECB) panel, or any of various other liquid crystal panels. The liquid crystal panel 12 may include a liquid crystal layer 12a, glass substrates 12b and 12c separated by the liquid crystal layer 12a, and a color filter 12d located between the liquid crystal layer 12a and the glass substrate 12c. A display area in the liquid crystal panel 12 to display an image is expected to be at or near the interface between the liquid crystal layer 12a and the color filter 12d. The display area in the liquid crystal panel 12 to display an image may be referred to as an active area in the 3D display device 10. An image is actually displayed on the active area. The liquid crystal panel 12 may further include alignment films, transparent electrodes, and polarizer plates. The arrangement and the structures of the alignment films, the transparent electrodes, and the polarizer plates are known as those for typical liquid crystal panels, and will not be described. The liquid crystal panel 12 may eliminate the color filter 12d. The 3D display device 10 may display a black and white image.

The first optical panel 13 and the second optical panel 14 define the traveling direction of incident light. The first optical panel 13 and the second optical panel 14 function as parallax barriers. The second optical panel 14 is nearer the backlight 11 than the liquid crystal panel 12 in the direction along the optical path of light emitted from the backlight 11. Light emitted from the backlight 11 thus enters the second optical panel 14, and then enters the liquid crystal panel 12. The second optical panel 14 blocks or attenuates a part of light emitted from the backlight 11 and transmits another part of the light to the liquid crystal panel 12. The liquid crystal panel 12 allows passage of incident light traveling in the direction defined by the second optical panel 14 to be image light traveling in the same direction. Light through the liquid crystal panel 12 enters the first optical panel 13, which is farther from the backlight 11 than the liquid crystal panel 12 in the direction along the optical path of light emitted from the backlight 11. The first optical panel 13 blocks or attenuates a part of image light emitted through the liquid crystal panel 12 and outputs another part of the image light toward eyes 5 of the user.

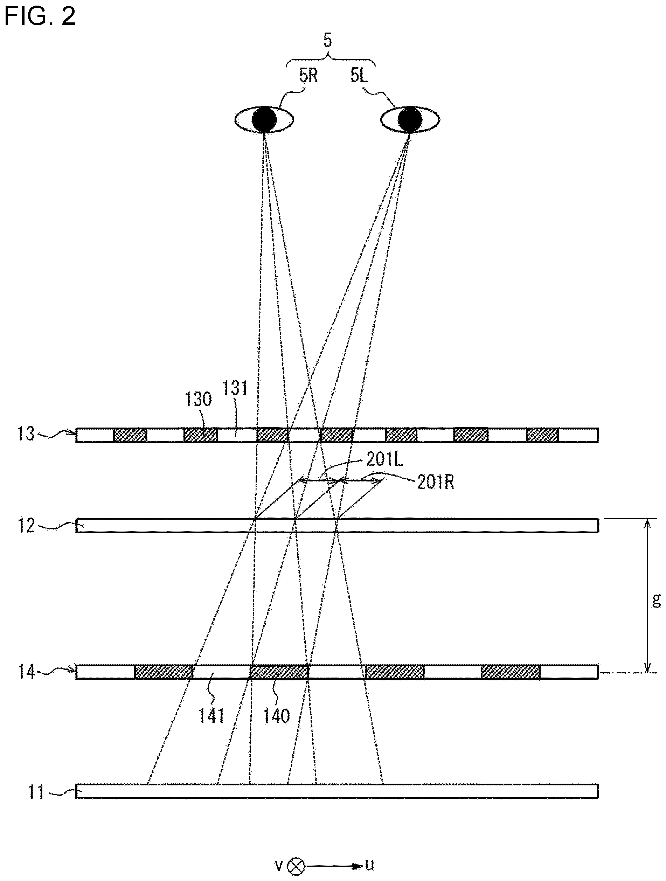

As illustrated in FIG. 2, the first optical panel 13 and the second optical panel 14 allow a part of image light emitted through the liquid crystal panel 12 to reach one of a left eye 5L or a right eye 5R of the user, and another part of the image light to reach the other one of the left eye 5L or the right eye 5R of the user. In other words, the first optical panel 13 and the second optical panel 14 direct at least a part of image light toward the left eye 5L of the user and toward the right eye 5R of the user. The first optical panel 13 and the second optical panel 14 define the traveling direction of image light to allow each of the left eye 5L and the right eye 5R of the user to receive different image light. Each of the left eye 5L and the right eye 5R of the user can thus view a different image.

The liquid crystal panel 12 includes left-eye viewing areas 201L viewable with the left eye 5L of the user and right-eye viewing areas 201R viewable with the right eye 5R of the user. The liquid crystal panel 12 displays a parallax image including left-eye images viewable with the left eye 5L of the user and right-eye images viewable with the right eye 5R of the user. A parallax image refers to an image projected toward the left eye 5L and the right eye 5R of the user to generate parallax between the two eyes of the user. The liquid crystal panel 12 displays left-eye images on the left-eye viewing areas 201L and right-eye images on the right-eye viewing areas 201R. In other words, the liquid crystal panel 12 displays a parallax image on the left-eye viewing areas 201L and the right-eye viewing areas 201R. The left-eye viewing areas 201L and the right-eye viewing areas 201R are arranged in u-direction indicating a parallax direction. The left-eye viewing areas 201L and the right-eye viewing areas 201R may extend in v-direction orthogonal to the parallax direction, or in a direction inclined with respect to v-direction at a predetermined angle. In other words, the left-eye viewing areas 201L and the right-eye viewing areas 201R may be arranged alternately in a predetermined direction including a component in the parallax direction. The pitch between the alternating left-eye viewing areas 201L and right-eye viewing areas 201R is also referred to as a parallax image pitch. The left-eye viewing areas 201L and the right-eye viewing areas 201R may be spaced from each other or adjacent to each other. The liquid crystal panel 12 may further include a display area to display a planar image. A planar image generates no parallax between the eyes 5 of the user and is not viewed stereoscopically.

The first optical panel 13 includes light-reducing portions 130 and transmissive portions 131. The first optical panel 13 is nearer the user than the liquid crystal panel 12 on the optical path of image light. The first optical panel 13 controls the transmittance of image light emitted through the liquid crystal panel 12. The transmissive portions 131 transmit light entering the first optical panel 13 from the liquid crystal panel 12. The transmissive portions 131 may transmit light with a transmittance of a first predetermined value or higher. The first predetermined value may be, for example, 100% or a value close to 100%. The light-reducing portions 130 reduce light entering the first optical panel 13 from the liquid crystal panel 12. The light-reducing portions 130 may transmit light with a transmittance of a second predetermined value or lower. The second predetermined value may be, for example, 0% or a value close to 0%. The first predetermined value is higher than the second predetermined value.

The light-reducing portions 130 and the transmissive portions 131 in the first optical panel 13 are arranged alternately in u-direction indicating the parallax direction being a first direction. The boundaries between the light-reducing portions 130 and the transmissive portions 131 may extend in v-direction orthogonal to the parallax direction, or in a direction inclined with respect to v-direction at a predetermined angle. In other words, the light-reducing portions 130 and the transmissive portions 131 may be arranged alternately in a predetermined direction including a component in the parallax direction.

The second optical panel 14 includes light-reducing portions 140 and transmissive portions 141. The second optical panel 14 is farther from the user than the liquid crystal panel 12 on the optical path of image light. The second optical panel 14 controls the transmittance of light emitted from the backlight 11 and directed to the liquid crystal panel 12. The transmissive portions 141 transmit light directed from the backlight 11 to the second optical panel 14. The transmissive portions 141 may transmit light with a transmittance of the first predetermined value or higher. The light-reducing portions 140 reduce light directed from the backlight 11 to the second optical panel 14. The light-reducing portions 140 may transmit light with a transmittance of the second predetermined value or lower. The transmissive portions 131 in the first optical panel 13 may have the same transmittance as or a different transmittance from the transmissive portions 141 in the second optical panel 14. The light-reducing portions 130 in the first optical panel 13 may have the same transmittance or a different transmittance from the light-reducing portions 140 in the second optical panel 14.

The light-reducing portions 130 and the transmissive portions 131 in the first optical panel 13 are arranged alternately in u-direction indicating the parallax direction. The light-reducing portions 140 and the transmissive portions 141 in the second optical panel 14 are arranged alternately in u-direction indicating the parallax direction. The boundaries between the light-reducing portions 130 and the transmissive portions 131 and the boundaries between the light-reducing portions 140 and the transmissive portions 141 may extend in v-direction orthogonal to the parallax direction. The boundaries between the light-reducing portions 130 and the transmissive portions 131 and the boundaries between the light-reducing portions 140 and the transmissive portions 141 may extend in a direction inclined with respect to v-direction at a predetermined angle. In other words, the light-reducing portions 130 and the transmissive portions 131 as well as the light-reducing portions 140 and the transmissive portions 141 may be arranged alternately in a predetermined direction including a component in the parallax direction.

The second optical panel 14 transmits a part of light emitted from the backlight 11 and directed to the liquid crystal panel 12 and reduces another part of the light. The first optical panel 13 transmits a part of light emitted through the liquid crystal panel 12 and reduces another part of the light. In the transmitted light, a portion of light through the left-eye viewing areas 201L in the liquid crystal panel 12 reaches the left eye 5L, and a portion of light through the right-eye viewing areas 201R in the liquid crystal panel 12 reaches the right eye 5R.

The second optical panel 14 directs light entering the liquid crystal panel 12, and the first optical panel 13 directs light emitted through the liquid crystal panel 12. In the present embodiment, the 3D display device 10 can thus reduce crosstalk and display a parallax image with improved display quality.

The light-reducing portions 130 and the transmissive portions 131 in the first optical panel 13 may have any structure that allows the transmissive portions 131 to transmit light with a transmittance of the first predetermined value or higher and the light-reducing portions 130 to transmit light with a transmittance of the second predetermined value or lower. The light-reducing portions 140 and the transmissive portions 141 in the second optical panel 14 may have any structure that allows the transmissive portions 141 to transmit light with a transmittance of the first predetermined value or higher and the light-reducing portions 140 to transmit light with a transmittance of the second predetermined value or lower.

The first optical panel 13 may include, for example, a first transmissive plate 13a and first light-reducing members 13b arranged at intervals in the parallax direction on one surface of the first transmissive plate 13a. The first transmissive plate 13a is a plate member made of a material that transmits light emitted through the liquid crystal panel 12 with a transmittance of the first predetermined value or higher. The plate member may be, for example, a plate, a sheet, or a film. The material for the first transmissive plate 13a may be, for example, a resin or glass. The first light-reducing members 13b are made of a material that transmits light emitted through the liquid crystal panel 12 with a transmittance of the second predetermined value or lower. The first light-reducing members 13b may be made of, for example, a resin containing a light-absorbing substance being dispersed, glass containing a light-absorbing substance being dispersed, or a metal material. The first optical panel 13 includes portions including the first light-reducing members 13b as the light-reducing portions 130, and portions other than the light-reducing portions 130 as the transmissive portions 131. The first optical panel 13 may be formed by, for example, attaching, printing, or depositing the first light-reducing members 13b by vapor deposition on the surface of the first transmissive plate 13a as appropriate for the material of the first light-reducing members 13b.

The second optical panel 14 may include, for example, a second transmissive plate 14a and second light-reducing members 14b arranged at intervals in the parallax direction on one surface of the second transmissive plate 14a. The second transmissive plate 14a is a plate member made of a material that transmits light emitted from the backlight 11 with a transmittance of the first predetermined value or higher. The material for the second transmissive plate 14a may be, for example, a resin or glass, similarly to the first transmissive plate 13a. The second light-reducing members 14b are made of a material that transmits light emitted from the backlight 11 with a transmittance of the second predetermined value or lower. Similarly to the first light-reducing members 13b, the second light-reducing members 14b may be made of a resin containing a light-absorbing substance being dispersed, glass containing a light-absorbing substance being dispersed, or a metal material. The second optical panel 14 includes portions including the second light-reducing members 14b as the light-reducing portions 140, and portions other than the light-reducing portions 140 as the transmissive portions 141. Similarly to the first optical panel 13, the second optical panel 14 may be formed by, for example, attaching, printing, or depositing the second light-reducing members 14b by vapor deposition on the surface of the second transmissive plate 14a as appropriate for the material of the second light-reducing members 14b.

The first optical panel 13 and the second optical panel 14 with these structures may include the first light-reducing members 13b and the second light-reducing members 14b facing the liquid crystal panel 12.

The first optical panel 13 and the second optical panel 14 may have the same or different aperture ratios. The aperture ratio of the first optical panel 13 may be equal to, for example, the proportion of the transmissive portions 131 in the first optical panel 13. The aperture ratio of the second optical panel 14 may be equal to, for example, the proportion of the transmissive portions 141 in the second optical panel 14. When the transmissive portions and the light-reducing portions each have a constant width (length in the parallax direction), the aperture ratio is determined by the ratio between the width of the transmissive portions and the width of the light-reducing portions, irrespective of the widths of the transmissive portions and the light-reducing portions. For example, when the transmissive portions 131 and the light-reducing portions 130 have the same width in the first optical panel 13, the aperture ratio is 50%. For example, when the ratio between the width of the transmissive portions 131 and the width of the light-reducing portions 130 is 3:5 in the first optical panel 13, the aperture ratio is 37.5%. For example, when the ratio between the width of the transmissive portions 131 and the width of the light-reducing portions 130 is 1:3 in the first optical panel 13, the aperture ratio is 25%. The same applies to the aperture ratio of the second optical panel 14.

In the example illustrated in FIG. 2, the transmissive portions 131 and the light-reducing portions 130 have the same width in the first optical panel 13, and thus the aperture ratio is 50%. The transmissive portions 141 and the light-reducing portions 140 have the same width in the second optical panel 14, and thus the aperture ratio is 50%, which is the same as the aperture ratio of the first optical panel 13. The first optical panel 13 and the second optical panel 14 each direct the same proportion of light. This reduces crosstalk in a parallax image further, thus allowing display of a parallax image with improved display quality.

When the first optical panel 13 and the second optical panel 14 have different aperture ratios, the first optical panel 13 may have an aperture ratio greater than the aperture ratio of the second optical panel 14. The first optical panel 13 that is nearer the user than the liquid crystal panel 12 has a greater aperture ratio. Thus, for any positional deviation of the first optical panel 13 during manufacture, for example, the transmissive portions 131 can transmit light directed by the second optical panel 14.

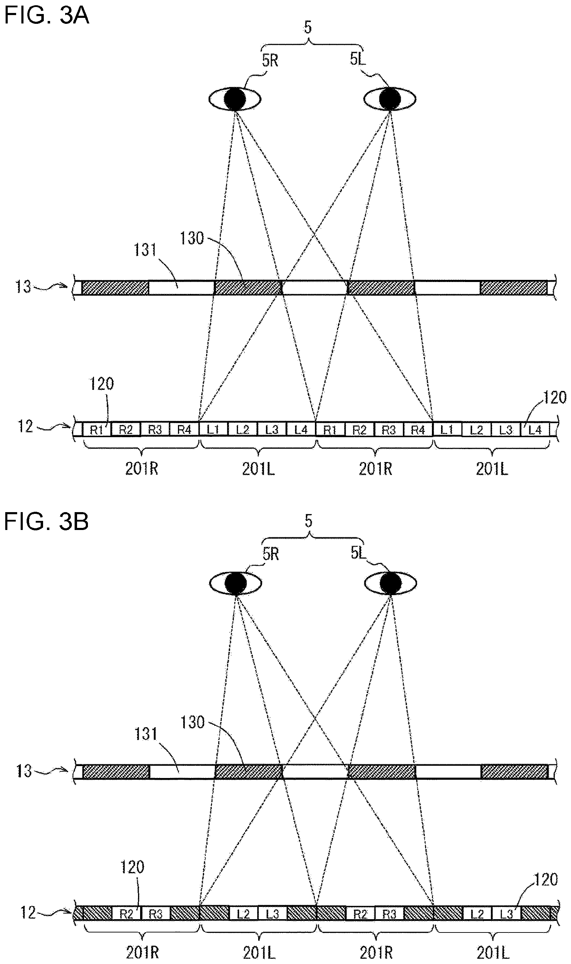

FIG. 3A is a diagram describing a first example of a parallax image displayed on the liquid crystal panel. With the controller 15 controlling the liquid crystal layer 12a, the liquid crystal panel 12 displays left-eye images on the left-eye viewing areas 201L and right-eye images on the right-eye viewing areas 201R. The display area in the liquid crystal panel 12 includes multiple subpixels 120 arranged in a lattice in u-direction and v-direction orthogonal to u-direction. In the example illustrated in FIG. 3A, each of the left-eye images and the right-eye images includes four subpixels 120 in u-direction. The four subpixels 120 included in each left-eye image are indicated by L1, L2, L3, and L4. The four subpixels 120 included in each right-eye image are indicated by R1, R2, R3, and R4. The subpixels 120 indicated by L4 and R1 are adjacent to each other. The subpixels 120 indicated by L1 and R4 are adjacent to each other. The user views the left-eye images with the left eye 5L and the right-eye images with the right eye 5R. In this case, crosstalk can occur when, for example, the subpixels 120 indicated by R1 and R4 are viewed with the left eye 5L. Crosstalk can also occur when, for example, the subpixels 120 indicated by L1 and L4 are viewed with the right eye 5R. In an embodiment of the present disclosure, the 3D display device 10 includes two optical panels, or the first optical panel 13 and the second optical panel 14, to direct image light, thus reducing crosstalk.

FIG. 3B is a diagram describing a second example of the parallax image displayed on the liquid crystal panel. The controller 15 controls the liquid crystal layer 12a to set the darkest tone for the subpixels 120 included in the left-eye images and adjacent to the right-eye images. The controller 15 controls the liquid crystal layer 12a to set the darkest tone for the subpixels 120 included in the right-eye images and adjacent to the left-eye images. In the example illustrated in FIG. 3B, the subpixels 120 indicated by L1 and L4 and the subpixels 120 indicated by R1 and R4 have the darkest tone. The subpixels 120 having the darkest tone in the liquid crystal panel 12 receive light with the lowest transmittance. The subpixels 120 that can cause crosstalk have the darkest tone, thus further reducing crosstalk.

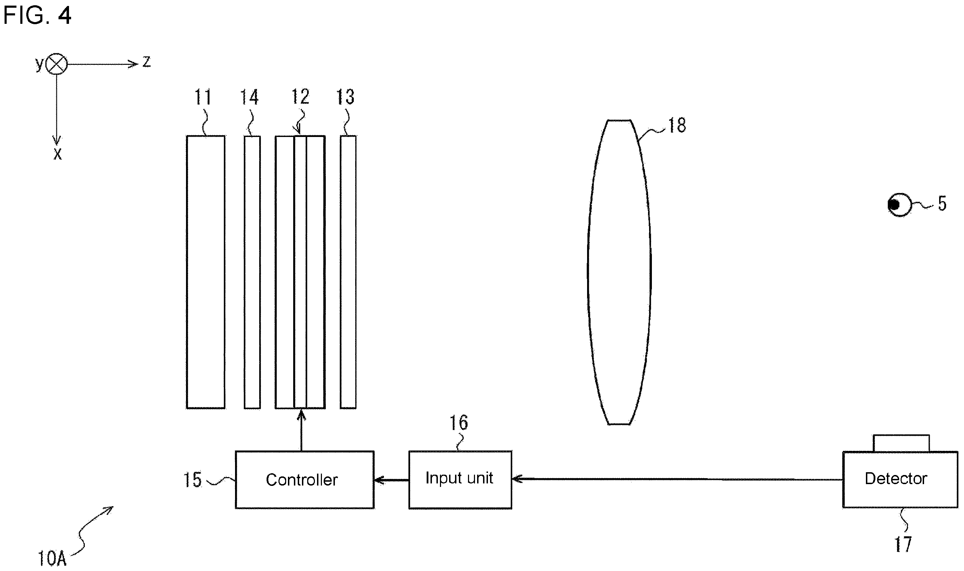

FIG. 4 is a schematic diagram of a 3D display device according to another embodiment of the present disclosure. In the present embodiment, a 3D display device 10A further includes a detector 17 that detects the positions of the eyes 5 of the user. The left-eye viewing areas 201L and the right-eye viewing areas 201R in the liquid crystal panel 12 change as the positions of the eyes 5 of the user change. The controller 15 controls the liquid crystal panel 12 to change the display of the left-eye images and the right-eye images as the left-eye viewing areas 201L and the right-eye viewing areas 201R change. The controller 15 may control the liquid crystal panel 12 based on the positions of the eyes 5 of the user detected by the detector 17.

The detector 17 detects the positions of the pupils of the eyes 5 of the user and outputs a detection result to an input unit 16. The input unit 16 can receive, from the detector 17, pupil positional information about the pupil positions, or the positions of the eyes 5 (eye positions). The input unit 16 can output the pupil positional information received from the detector 17 to the controller 15. The input unit 16 may include an electric connector or an optical connector to receive an electric signal or an optical signal from the detector 17. The input unit 16 may output an electric signal or an optical signal to the controller 15.

The detector 17 may capture an image of the face of the user with a camera. The detector 17 may detect the position of at least one of the left eye 5L or the right eye 5R using the image captured with the camera. The detector 17 may detect, using an image captured with one camera, the pupil position of at least one of the left eye 5L or the right eye 5R as coordinates in a 3D space. The detector 17 may detect, using images captured with two or more cameras, the pupil position of at least one of the left eye 5L or the right eye 5R as coordinates in a 3D space.

The detector 17 may include no camera and may be connected to an external camera. The detector 17 may include an input terminal for receiving signals from the external camera. The external camera may be connected to the input terminal directly. The external camera may be connected to the input terminal indirectly through a shared network. The detector 17 including no camera may include an input terminal for receiving image signals from a camera. The detector 17 including no camera may detect the pupil position of at least one of the left eye 5L or the right eye 5R from the image signals received through the input terminal.

The detector 17 may include a sensor in place of a camera. The sensor may be an ultrasonic sensor or an optical sensor. The detector 17 may detect the position of the head of the user with the sensor, and estimate the pupil position of at least one of the left eye 5L or the right eye 5R based on the position of the head. The detector 17 may detect, with one sensor or two or more sensors, the position of at least one of the left eye 5L or the right eye 5R as coordinates in a 3D space.

When detecting the pupil position of one of the left eye 5L or the right eye 5R, the detector 17 may estimate the pupil position of the other eye from the user's inter-eye distance information or typical inter-eye distance information. The pupil position of the other eye may be estimated by the controller 15 rather than by the detector 17.

The 3D display device 10A may further include an optical system 18. The optical system 18 may scale an image displayed on the liquid crystal panel 12 and project the image into the field of view of the user. The optical system 18 may include, for example, a reflective optical element and a refractive optical element. The controller 15 controls the liquid crystal panel 12 based on the scaling factor used by the optical system 18 with respect to the positions of the eyes 5 of the user.

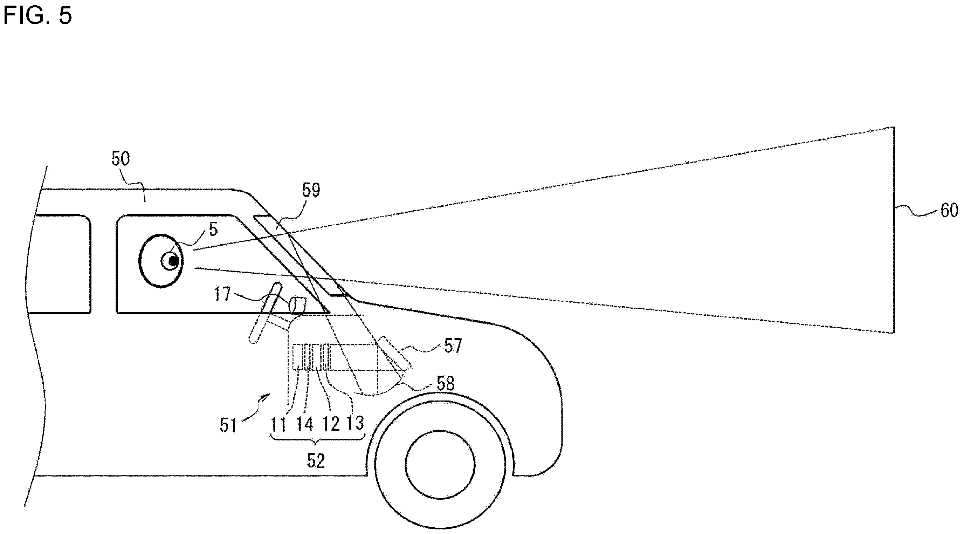

FIG. 5 is a schematic diagram of a head-up display mounted on a movable body, such as a vehicle, as one implementation of the display device according to an embodiment of the present disclosure. A head-up display 51 may also be referred to as a HUD. The head-up display 51 is an image display system including a 3D display device 52 and a detector 53. The detector 53 detects the positions of the eyes 5 of the user who is the driver of a movable body 50, and transmits the information to the 3D display device 52. The 3D display device 52 has the same or similar structure as the 3D display device 10. More specifically, the 3D display device 52 may include the backlight 11, the liquid crystal panel 12, the first optical panel 13, the second optical panel 14, and the controller 15.

The 3D display device 52 further includes an optical system that projects an image displayed on the liquid crystal panel 12 into the field of view of the user as a virtual image 60. The optical system includes a first optical member 57, a second optical member 58, and a projection reception member 59. The first optical member 57 is a mirror that reflects image light emitted from the 3D display device 52. The second optical member 58 is a mirror that reflects the image light reflected from the first optical member 57 toward the projection reception member 59. One or both of the first optical member 57 and the second optical member 58 may be concave mirrors each having a positive refractive power. The projection reception member 59 is a semitransparent member that reflects the incident image light toward the eyes 5 of the user and also transmits light entering from the front of the user. The projection reception member 59 may be a part of a windshield. The projection reception member 59 may be a dedicated combiner. The structure of the optical system is not limited to the combination of mirrors. The structure of the optical system may be changed variously.

For example, the optical system may include a mirror and a lens in combination.

In the structure described above, the head-up display 51 projects an image into the field of view of the user as the virtual image 60 based on the positions of the eyes 5 of the user. The image is perceived by the user as appearing at the position at which the virtual image 60 appears. Additionally, the head-up display 51 including the 3D display device 52 can reduce crosstalk and display a virtual image with improved display quality.

The structure according to the present disclosure is not limited to the structure described in the above embodiments, but may be changed or altered variously. For example, the functions of the components are reconfigurable unless any contradiction arises. Multiple components may be combined into a single unit, or a single component may be divided into separate units.

In one or more embodiments of the present disclosure, the movable body includes a vehicle, a vessel, and an aircraft. In one or more embodiments of the present disclosure, the vehicle includes, but is not limited to, an automobile and an industrial vehicle, and may also include a railroad vehicle, a community vehicle, and a fixed-wing aircraft traveling on a runway. The automobile includes, but is not limited to, a passenger vehicle, a truck, a bus, a motorcycle, and a trolley bus, and may also include another vehicle traveling on a road. The industrial vehicle includes an industrial vehicle for agriculture and an industrial vehicle for construction. The industrial vehicle includes, but is not limited to, a forklift and a golf cart. The industrial vehicle for agriculture includes, but is not limited to, a tractor, a cultivator, a transplanter, a binder, a combine, and a lawn mower. The industrial vehicle for construction includes, but is not limited to, a bulldozer, a scraper, a power shovel, a crane vehicle, a dump truck, and a road roller. The vehicle includes a human-powered vehicle. The classification of the vehicle is not limited to the above. For example, the automobile may include an industrial vehicle traveling on a road, and one type of vehicle may fall within multiple classes. In one or more embodiments of the present disclosure, the vessel includes a jet ski, a boat, and a tanker. In one or more embodiments of the present disclosure, the aircraft includes a fixed-wing aircraft and a rotary-wing aircraft.

In the present disclosure, first, second, and others are identifiers for distinguishing the components. The identifiers of the components distinguished with first, second, and others in the present disclosure are interchangeable. For example, the first optical panel can be interchangeable with the second optical panel. The identifiers are to be interchanged together. The components for which the identifiers are interchanged are also to be distinguished from one another. The identifiers may be eliminated. The components without such identifiers can be distinguished with reference numerals. The identifiers such as first and second in the present disclosure alone should not be used to determine the orders of the components or to determine the existence of smaller or larger number identifiers.

Although the embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

EXAMPLES

For the 3D display device according to one or more embodiments of the present disclosure, the measurement results of crosstalk in examples and comparative examples will be described. The devices used in the examples and the comparative examples each include the same liquid crystal panel 12. The devices used in the examples include optical panels with different aperture ratios (examples 1 to 3), and display different parallax images on the liquid crystal panels (examples 4 and 5). The optical panel in each example includes a transmissive plate with light-reducing members on its surface and is located with the light-reducing members facing the liquid crystal panel.

Structures in Examples and Comparative Examples

Example 1

Aperture ratio of first optical panel 13: 25%
Aperture ratio of second optical panel 14: 25%
Parallax image displayed on liquid crystal panel 12: first example

Example 2

Aperture ratio of first optical panel 13: 37.5%

Aperture ratio of second optical panel 14: 25%
Parallax image displayed on liquid crystal panel 12: first example

Example 3

Aperture ratio of first optical panel 13: 25%
Aperture ratio of second optical panel 14: 37.5%
Parallax image displayed on liquid crystal panel 12: first example

Example 4

Aperture ratio of first optical panel 13: 25%
Aperture ratio of second optical panel 14: 25%
Parallax image displayed on liquid crystal panel 12: second example

Example 5

Aperture ratio of first optical panel 13: 37.5%
Aperture ratio of second optical panel 14: 25%
Parallax image displayed on liquid crystal panel 12: second example

Comparative Example 1

Aperture ratio of first optical panel 13: 25%
Second optical panel 14: unused
Parallax image displayed on liquid crystal panel 12: first example

Comparative Example 2

First optical panel 13: unused
Aperture ratio of second optical panel: 25%
Parallax image displayed on liquid crystal panel 12: first example

Crosstalk Measurement

For the head-up display 51 with the structure illustrated in FIG. 5, the luminance ($cd/m^2$) was measured, with a spectroradiometer (SR-LEDW, Topcon Technohouse Corporation) placed at the positions corresponding to the positions of the eyes of the user, under the conditions described below.

Condition 1

The luminance was measured, with the radiometer at the left (right) eye position, with the backlight 11 turned on, and with the subpixels in the left-eye (right-eye) viewing areas in the liquid crystal panel 12 set to the darkest tone and the subpixels in the right-eye (left-eye) viewing areas set to the lightest tone.

Condition 2

The luminance was measured, with the radiometer at the left (right) eye position, with the backlight 11 turned on, and with the subpixels in the left-eye (right-eye) viewing areas in the liquid crystal panel 12 set to the lightest tone and the subpixels in the right-eye (left-eye) viewing areas set to the darkest tone.

Condition 3

The luminance was measured, with the radiometer at the left (right) eye position, with the backlight 11 turned on, and with all the subpixels in the liquid crystal panel 12 set to the darkest tone.

Crosstalk (%) was calculated using the formula below.

$$\text{Crosstalk (\%)} = ((\text{luminance under condition 1} - \text{luminance under condition 3})/(\text{luminance under condition 2} - \text{luminance under condition 3})) \times 100$$

Table 1 shows the measurement results under the conditions and the calculation results of crosstalk. The measurement results are normalized using the luminance under condition 2 in comparative example 2 as 1000.

Table 1

|  | Example 1 | Example2 | Example 3 | Example 4 | Example 5 | Comparative example 1 | Comparative example 2 |
|---|---|---|---|---|---|---|---|
| Condition 1 | 2.08 | 4.61 | 4.86 | 1.11 | 2.52 | 74 | 13 |
| Condition2 | 623 | 711 | 699 | 590 | 647 | 904 | 1000 |
| Condition 3 | 0.22 | 0.39 | 0.51 | 0.21 | 0.39 | 0.69 | 0.70 |
| Crosstalk (%) | 0.30 | 0.59 | 0.62 | 0.15 | 0.33 | 8.08 | 1.26 |

Less crosstalk was observed in examples 1 to 5 than in comparative examples 1 and 2. The comparison between examples 1 to 3 shows that still less crosstalk was observed for the first optical panel and the second optical panel with the same aperture ratio (example 1) than for the first optical panel and the second optical panel with different aperture ratios (examples 2 and 3). The comparison between examples 1 and 4 and the comparison between examples 2 and 5 show that still less crosstalk was observed with the second example (FIG. 3B) of the parallax image displayed on the liquid crystal panel 12 than with the first example (FIG. 3A).

The present disclosure may be implemented in the following forms.

In one or more embodiments of the present disclosure, a three-dimensional display device includes a liquid crystal panel that displays a parallax image, a first optical panel on a first surface of the liquid crystal panel, and a second optical panel on a second surface of the liquid crystal panel. The first optical panel and the second optical panel define a traveling direction of image light of the parallax image.

In one or more embodiments of the present disclosure, an image display system includes a three-dimensional display device, a camera, a detector, and a controller. The three-dimensional display device includes a liquid crystal panel that displays a parallax image, a first optical panel on a first surface of the liquid crystal panel, and a second optical panel on a second surface of the liquid crystal panel. The first optical panel and the second optical panel define a traveling direction of image light of the parallax image. The camera captures an image of a face of a user. The detector detects positions of two eyes of the user using the image captured and output from the camera. The controller controls the liquid crystal panel based on the positions of the two eyes of the user detected by the detector.

In one or more embodiments of the present disclosure, the 3D display device can reduce crosstalk and display a parallax image with improved display quality.

In one or more embodiments of the present disclosure, the image display system can reduce crosstalk and display a parallax image with improved display quality.

REFERENCE SIGNS

5 eye
5L left eye

5R right eye
10, 10A three-dimensional (3D) display device
11 backlight
12 liquid crystal panel
12a liquid crystal layer
12b glass substrate
12c glass substrate
12d color filter
13 first optical panel
13a first transmissive plate
13b first light-reducing member
14 second optical panel
14a second transmissive plate
14b second light-reducing member
15 controller
16 input unit
17 detector
18 optical system
50 movable body
51 head-up display
52 3D display device
53 detector
57 first optical member
58 second optical member
59 projection reception member
60 virtual image
120 subpixel
130 light-reducing portion
131 transmissive portion
140 light-reducing portion
141 transmissive portion
201L left-eye viewing area
201R right-eye viewing area

**Claims**

1. A three-dimensional display device, comprising:

   a liquid crystal panel configured to display a parallax image;
   a first optical panel on a first surface of the liquid crystal panel; and
   a second optical panel on a second surface of the liquid crystal panel,
   wherein the first optical panel and the second optical panel define a traveling direction of image light of the parallax image.

2. The three-dimensional display device according to claim 1, wherein

   the first optical member includes first light-reducing portions and first transmissive portions located alternately in a first direction, and
   the second optical member includes second light-reducing portions and second transmissive portions located alternately in the first direction.

3. The three-dimensional display device according to claim 2, wherein

   the first optical panel includes a first transmissive plate and first light-reducing members on a surface of the first transmissive plate at intervals in the first direction,
   the second optical panel includes a second transmissive plate and second light-reducing members on a surface of the second transmissive plate at intervals in the first direction,

the first optical panel includes the first light-reducing members facing the liquid crystal panel, and
the second optical panel includes the second light-reducing members facing the liquid crystal panel.

4. The three-dimensional display device according to any one of claims 1 to 3, wherein the first optical panel and the second optical panel have different aperture ratios.

5. The three-dimensional display device according to claim 4, wherein

the image light travels from the first optical panel toward a user, and
the first optical panel has a greater aperture ratio than the second optical panel.

6. The three-dimensional display device according to any one of claims 1 to 3, wherein the first optical panel and the second optical panel have a same aperture ratio.

7. The three-dimensional display device according to any one of claims 1 to 6, wherein the first optical panel and the second optical panel project the parallax image toward two eyes of a user.

8. An image display system, comprising:
a three-dimensional display device including

a liquid crystal panel configured to display a parallax image,
a first optical panel on a first surface of the liquid crystal panel, and
a second optical panel on a second surface of the liquid crystal panel, the first optical panel and the second optical panel being configured to define a traveling direction of image light of the parallax image;
a camera configured to capture an image of a face of a user;
a detector configured to detect positions of two eyes of the user using the image captured and output from the camera; and
a controller configured to control the liquid crystal panel based on the positions of the two eyes of the user detected by the detector.

FIG. 1

# FIG. 2

FIG. 3A

FIG. 3B

FIG. 4

FIG. 5

## INTERNATIONAL SEARCH REPORT

| International application No. |
|---|
| **PCT/JP2021/045674** |

| **A.** | **CLASSIFICATION OF SUBJECT MATTER** |
|---|---|

*G02B 30/30*(2020.01)i; *G03B 15/00*(2021.01)i; *G03B 17/00*(2021.01)i; *G03B 35/18*(2021.01)i
FI: G02B30/30; G03B17/00 Q; G03B15/00 Q; G03B35/18

According to International Patent Classification (IPC) or to both national classification and IPC

| **B.** | **FIELDS SEARCHED** |
|---|---|

Minimum documentation searched (classification system followed by classification symbols)

G02B30/26-30/33; G03B35/18; H04N13/225

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2019-148638 A (KYOCERA CORP) 05 September 2019 (2019-09-05) paragraphs [0012]-[0068], fig. 1, 9-11 | 1-2 |
| Y | paragraphs [0012]-[0068], fig. 1, 9-11 | 3, 6-8 |
| A | paragraphs [0012]-[0068], fig. 1, 9-11 | 4-5 |
| Y | JP 09-050019 A (SANYO ELECTRIC CO LTD) 18 February 1997 (1997-02-18) paragraphs [0067]-[0080], fig. 5-6, 8 | 3, 6 |
| Y | JP 2005-078093 A (SHARP CORP) 24 March 2005 (2005-03-24) paragraph [0019] | 1, 4-5, 7 |
| Y | JP 2005-266553 A (TS PHOTON:KK) 29 September 2005 (2005-09-29) paragraph [0013] | 8 |
| Y | JP 2009-025819 A (TOPPOLY OPTOELECTRONICS CORP) 05 February 2009 (2009-02-05) paragraphs [0023]-[0028], fig. 7, 10 | 1, 4-5, 7 |
| A | paragraphs [0023]-[0028], fig. 7, 10 | 2-3, 6, 8 |

☑ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 January 2022** | **08 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2021/045674** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2012/0320170 A1 (ELECTRONICS AND TELECOMMUNICATIONS RESEARCH INSTITUTE) 20 December 2012 (2012-12-20) entire text, all drawings | 1-8 |

Form PCT/ISA/210 (second sheet) (January 2015)

INTERNATIONAL SEARCH REPORT
Information on patent family members

International application No.

**PCT/JP2021/045674**

| Patent document cited in search report | | | Publication date (day/month/year) | Patent family member(s) | | | Publication date (day/month/year) |
|---|---|---|---|---|---|---|---|
| JP | 2019-148638 | A | 05 September 2019 | WO | 2019/163817 | A1 | |
| JP | 09-050019 | A | 18 February 1997 | (Family: none) | | | |
| JP | 2005-078093 | A | 24 March 2005 | GB | 2405544 | A | |
| | | | | p. 5, line 27 to p. 6, line 4 | | | |
| | | | | KR | 10-2005-0022958 | A | |
| | | | | CN | 1601331 | A | |
| JP | 2005-266553 | A | 29 September 2005 | (Family: none) | | | |
| JP | 2009-025819 | A | 05 February 2009 | US | 2009/0021674 | A1 | |
| | | | | paragraphs [0036]-[0041], fig. 7, 10 | | | |
| | | | | EP | 2019330 | A2 | |
| | | | | CN | 101349829 | A | |
| | | | | TW | 200905318 | A | |
| US | 2012/0320170 | A1 | 20 December 2012 | KR | 10-2012-0140204 | A | |

Form PCT/ISA/210 (patent family annex) (January 2015)

**EP 4 273 617 A1**

**Patent documents cited in the description**

- JP 2012141331 A